# EUROPÄISCHE PATENTSCHRIFT

(11) **EP 2 681 157 B1**
(45) Veröffentlichungstag und Bekanntmachung des Hinweises auf die Patenterteilung: **18.12.2019**
(21) Anmeldenummer: 12706471.5
(22) Anmeldetag: 24.02.2012
(51) Int. Cl.: C02F 1/00, C02F 9/00, C02F 5/08, C02F 1/66, C02F 1/68

(54) **WASSERKONDITIONIERUNGSVORRICHTUNG ZUR VERMEIDUNG ODER REDUZIERUNG VON MINERALAUSFÄLLUNGEN**
WATER CONDITIONER FOR PREVENTING OR REDUCING MINERAL PRECIPITATION
DISPOSITIF DE CONDITIONNEMENT D'EAU POUR ÉVITER OU RÉDUIRE LES PRÉCIPITATIONS MINÉRALES

(30) Priorität: 04.03.2011 DE 102011013114
(43) Veröffentlichungstag der Anmeldung: 08.01.2014
(73) Patentinhaber: Aquis Wasser-Luft-Systeme GmbH, Lindau, Zweigniederlassung Rebstein, 9445 Rebstein (CH)
(72) Erfinder: TROJAN-HEITELE, Birgit, CH-9437 Marbach (CH); SCHOLZ, Roland, HU-1022 Budapest (CH); HEITELE, Bernd, CH-9437 Marbach (CH)
(74) Vertreter: Otten, Roth, Dobler & Partner mbB Patentanwälte
(86) Internationale Anmeldenummer: PCT/EP2012/000796
(87) Internationale Veröffentlichungsnummer: WO 2012/119710

(56) Entgegenhaltungen:
- EP-A1- 0 451 434
- EP-A1- 0 831 065
- EP-A2- 2 272 801
- DE-A1- 10 010 759
- JP-A- 2003 154 241
- JP-A- 2006 263 718
- US-A- 3 189 554
- US-A- 3 855 125
- US-A- 4 269 723
- US-A- 4 547 294
- US-A- 4 861 511
- US-A- 5 328 633
- US-A1- 2003 158 073
- US-A1- 2008 245 994
- US-A1- 2009 048 144
- US-A1- 2010 263 688

## Beschreibung

Mineralausfällungen, insbesondere die Bildung von CaCO₃ Ausfällungen (Kalk), sind störend beim Betrieb von Geräten, welche beispielsweise mit Heisswasser arbeiten oder in denen Wasserinhaltstoffe aufkonzentriert werden. Hierzu zählen beispielsweise Wasserkocher, Kaffeemaschinen, Dampfgarer, Geschirrspülmaschinen, Waschmaschinen, Dampfgeräte, insbesondere Dampfbügeleisen, Hochdruckreiniger, Luftreiniger und -konditionierer, Eismaschinen, insbesondere Eiswürfelmaschinen, Trinkwasserspender, Getränkeautomaten oder dergleichen. Zur Vermeidung oder Reduzierung störender Mineralausfällungen, insbesondere Kalkausfällungen, wird daher nach handelsüblichem Stand der Technik eine Rohwasservorbehandlung eingesetzt. Hierbei handelt es sich um Enthärtungs- oder Entcarbonierungsanlagen, bei denen Ionenaustauscher und insbesondere Kationenaustauscher, z. B. schwach saure Kationenaustauscher, eingesetzt werden.

Auch ist die Dosierung eines Mittels zur Behinderung der Kristallbildung, beispielsweise der CaCO₃ Kristall-Bildung, bzw. zur Stabilisierung von gelöst im Wasser vorkommenden Mineralien ein gängiges Verfahren zur Unterdrückung von Mineralausfällungen, insbesondere von Kalkausfällungen.

In der EP 2 272 801 A2 wird auch die Kombination von Enthärtung oder Entcarbonisierung mit Mitteln zur Reduzierung von Mineralausfällungen, beispielsweise Mitteln zur Behinderung der Kristallbildung, bzw. Antiscaling-Substanzen, beispielsweise Komplexbildnern, wie z. B. Polyphosphaten, beschrieben.

Bekannte Verfahren zur Einbringung von Mitteln zur Reduzierung von Mineralausfällungen, bzw. Antiscaling Substanzen, wie z.B. Komplexbildnern in Flüssigkeiten, insbesondere von Phosphaten, bzw. Polyphosphaten, sind unter anderem Flüssigdosiereinrichtungen und Systeme zur Lösung von kristallinen oder amorph vorliegenden oder festen Antiscaling Substanzen, z. B. Komplexbildnern, wie Polyphosphatsalzen, in Form von Kügelchen, Pulvern oder anderweitig konditionierten Einsatzformen.

Die Dosierung von Antiscaling Substanzen, wie z. B. Komplexbildnern, insbesondere von Polyphosphaten, zur Unterdrückung der Auskristallisation von übersättigten Kalziumcarbonatlösungen wird heute in vielen Ländern nur noch mithilfe von Flüssigdosiereinrichtungen, welche durchflussvolumenproportional ein Polyphosphatkonzentrat zugeben, empfohlen, da die bekannten, mit festen Komplexbildnern ausgestatteten Systeme, im Folgenden mit Schleusensystem bezeichnet, aufgrund einer von der jeweiligen Nutzung abhängigen unterschiedlichen Verweil- und Kontaktzeit zwischen Komplexbildner und Flüssigkeit, im Besonderen von Polyphosphatsalzen und Wasser, keine gleichmässige Abgabe von Polyphospat an das Wasser ermöglichen. In Folge dieser ungleichmässigen Abgabe ist die Konzentration von gelöstem Polyphosphat im Wasser je nach Bedarfsverhalten des Nutzers bzw. des Verbrauchers stark schwankend.

Um Überkonzentrationen der Antiscaling Substanz, bzw. des Komplexbildners in Flüssigkeiten zu vermeiden, setzt man deshalb insbesondere bei der Konditionierung von Trinkwasser auch sogenannte schwerlösliche Antiscaling Substanzen, bzw. Komplexbildner, beispielsweise schwerlösliche Polyphosphate ein.

So steckt man bei der Nutzung von schwerlöslichen Antiscaling Substanzen, z. B. Polyphosphaten, in Schleusensystemen in einem Dilemma. Möchte man die empfohlene Höchstkonzentration an Antiscaling Substanz, beispielsweise von Polyphosphat, im aufbereiteten Wasser (7 mg/l für Polyphosphat nach TVO Deutschland) nach Stagnation des Systems, z. B. über Nacht, nicht überschreiten, so kann man nur äusserst schwerlösliche Polyphosphate einsetzen. Wird allerdings das Schleusensystem bei kontinuierlichem Bedarf an aufbereitetem Wasser mit hoher Flussrate durchströmt, so fällt die Dosagemenge an Polyphosphat sehr rasch unter die angestrebte Minimalkonzentration, die für eine geforderte Löslichkeitsstabilisierung der Mineralien, insbesondere des CaCO₃ benötigt wird. Damit verliert die Wasseraufbereitung ihre Wirksamkeit zum effektiven Schutz vor Kalkausfällungen bzw. zur effektiven Reduzierung von CaCO₃ Ausfällungen.

Im Stand der Technik offenbaren die US 5,328,633, US 4,861,511, US 3,189,554 und US 4,269,723 in mit Seewasser bzw. Leitungswasser gespülte Urinale oder Toilettenspültanks einzulegende Dosierwürfel, enthaltend ein Mittel zur Reduzierung von Mineralausfällungen und einen Binder.

Die US 2003/0158073 A1 thematisiert einen mechanisch stabilen, leicht wasserlöslichen Waschmittel-Pressling, die US 2009/0048144 A1 einen in einem Behältnis mit wasserpermeabler Rückhaltewandung eingeschlossenen Wasserenthärter zur Deponierung in der Trommel oder der Waschmittelkammer einer Waschmittelschublade einer Kleiderwaschmaschine, die US 2008/0245994 A1 einen Wasser-Enthärter-Pressling zur Deponierung in der Kleider-Waschmaschine und die DE 100 10 759 A1 ein Verfahren zur Herstellung von Wasch- und Reinigungsmittel-Formkörpern.

Die EP 2 272 801 A2 offenbart einen Wasserfilter mit Härtereduzierer und Resthärtestabilisator, sowie einer Verschnitt-Vorrichtung zur Erhöhung der Literkapazität und Verlängerung der Betriebszeit. Die US 2010/0263688 A1 offenbart eine Vorrichtung zur Härtereduzierung in Leitungssystemen mittels eines Katalysators zur Initiierung der Ausbildung von Aragonit-Kristallkeimlingen, der weniger stabilen Kristallform von Kalkausfällungen aus hartem Wasser an der Katalysatoroberfläche.

Die US 3,855,125 beschreibt ein Neutralisationsverfahren für Säuren in industriellen Abfallprodukten mittels Zugabe von Löschkalk.

Die US 4,547,294 und die EP 0 451 434 A1 thematisieren die Vermeidung von ausfällungsbedingten Ablagerungen und Korrosion in mittels Kühltürmen gekühlten Kühl-Kreislauf-Systemen durch Beimengung von Kohlendioxid in das Kühl-Kreislauf-Wasser. Auch die EP 0 831 065 A1 beschreibt ein derartiges Verfahren, jedoch mittels weit über 100-fach übersättigter Lösung als Kühlmittel-Kreislaufwasser.

Die JP 2006 263 718 A offenbart eine Wasseraufbereitungsvorrichtung mit einem Ionenaustauscherharz zur Reduzierung der Härte und zusätzlich einem Resthärtestabilisator, um bereits ausgefällten Kesselstein in einem gelösten Zustand zu halten. Der Resthärtestabilisator hat dabei die Charakteristik, erst dann intensiver zu eluieren, wenn die Kapazität des Ionenaustauscherharzes abnimmt. Ferner wird ein Dispergiermittel offenbart, um Phosphorsäureapatit auf der Oberfläche von Kesselstein zu dispergieren.

Die JP 2003 154 241 A offenbart (gem. der EP-Maschinenübersetzung) eine Vorrichtung zur einfachen und zuverlässigen Überwachung der Lösungskonzentration eines in fester Form vorliegenden Arzneimittels in einem Lösungsmittel, mittels einer Sensor und Pumpen gestützten Kreislaufführung des Lösungsmittels.

### Aufgabe/Lösung:

Dem vorliegenden Patentbegehren liegt die Aufgabe zugrunde, die Aufbereitung von Wasser, insbesondere von Trinkwasser gemäß des einleitend dargelegten Standes der Technik zu verbessern

Die Lösung erfolgt ausgehend vom Oberbegriff des Anspruchs 1 durch dessen kennzeichnende Merkmale. In den abhängigen Ansprüchen sind zweckmäßige und vorteilhafte Weiterbildungen angegeben.

Dementsprechend betrifft die vorliegende Erfindung eine Wasseraufbereitungsvorrichtung, insbesondere für die Speisung von wasserführenden und/oder Wasser erhitzenden Haushaltsgeräten, Küchengeräten oder Geräten zur Herstellung und Aufbereitung von Speisen und/oder Getränken mit aufbereitetem Trinkwasser, wie Getränkeautomaten, Kaffeeautomaten, Eismaschinen, Koch- und Backgeräte, Dampferzeuger oder Hochdruckreiniger, Luftkonditionierer oder dergleichen mit aufbereitetem Wasser, mit einem Mittel zur Reduzierung von Mineralausfällungen. Sie zeichnet sich dadurch aus, dass ein das Lösungsverhalten des Mittels zur Reduzierung von Mineralausfällungen beeinflussendes erstes Medium vorgesehen ist.

Das beeinflussende Medium kann beispielsweise ein Löslichkeitshemmer, Löslichkeitserhöher, Löslichkeitsbeschleuniger, Löslichkeitsmoderator oder Konzentrationsmoderator für das Mittel zur Reduzierung von Mineralausfällungen sein. Unter einem Moderator wird erfindungsgemäß ein Medium verstanden, dass je nach Beeinflussung des Mittels durch ein erstes Medium und/oder durch Inhaltsstoffe des Wassers und/oder durch die in umgebende Temperatur und/oder abhängig von der Betriebsweise der Wasseraufbereitungsvorrichtung, die Löslichkeit des Mittels oder die Konzentration des Mittels im Wasser absenkt, erhöht und/oder in einem bestimmten Wertbereich hält.

Der Moderator kann dem Mittel z. B. Ionen entziehen oder an dieses abgeben, oder Ionen mit dem Mittel austauschen oder die Löslichkeit des Mittels herab- oder heraufsetzen oder im Wasser gelöstes Mittel aufnehmen oder abgeben. So kann während einer Stagnationsphase, oder bei Nichtdurchströmung der Wasseraufbereitungsvorrichtung, beispielsweise durch Aufnahme des Mittels aus dem Wasser, z. B. durch Aufnahme oder Austausch von Ionen des Mittels, die Konzentration des Mittels im Wasser in einem vorgegebenen Werte- Bereich und/oder das Mittel in einem gering löslichen Zustand gehalten werden. Bei einer darauf folgenden Entnahmephase, oder bei Durchströmung der Wasseraufbereitungsvorrichtung kann der Moderator das vorher durch ihn aufgenommene Mittel und/oder die vorher von ihm aufgenommenen Ionen des Mittels wieder abgeben oder austauschen und damit die Konzentration des Mittels im Wasser in einem vorgegebenen Wertebereich halten und/oder die Löslichkeit des Mittels wieder heraufsetzen.

So führt die geringere Kontaktzeit des Mittels mit dem Medium in Entnahmephasen, oder Durchströmungsphasen der Wasseraufbereitungsvorrichtung nicht zu einer Unterkonzentration des Mittels im Wasser und zu einer reduzierten oder fehlenden Wirksamkeit des Mittels zum Schutz vor Mineralausfällungen. In Stagnationsphasen, oder bei Nichtdurchströmung der Wasseraufbereitungsvorrichtung führt so die längere Kontaktzeit des Mittels mit dem Medium nicht zu einer Überkonzentration des Mittels im Wasser.

Das beeinflussende Medium kann in fester, flüssiger oder gasförmiger Form vorliegen. Es kann mobil oder immobil in der Wasseraufbereitungsvorrichtung wirken.

Dem Aufbau einer derartigen Wasseraufbereitungsvorrichtung liegt die Erkenntnis zugrunde, dass über eine Einflussnahme auf das Lösungsverhalten des Mittels zur Reduzierung von Mineralausfällungen, insbesondere seinem Lösungsverhalten in dem von ihm aufzubereitenden Wasser, auch mit solchen Mitteln eine ausreichende Reduzierung von Mineralausfällungen erreicht werden kann, mit denen dies bisher nicht oder nicht in zufriedenstellendem Masse möglich war, insbesondere nicht unter allen Betriebsbedingungen.

So kann beispielsweise die Löslichkeit eines an sich schwer löslichen Mittels zur Reduzierung von Mineralausfällungen, bzw. zur Reduzierung von Härteausfällungen, beispielsweise von CaCO₃, gezielt so beinflusst werden, dass sich die Löslichkeit des Mittels während Zeiten der Entnahme von Wasser oder bei Durchströmung der Wasseraufbereitungsvorrichtung erhöht und sich das Mittel in einer ausreichenden Konzentration im Wasser löst und die Ausfällung von CaCO₃ in Leitungen und/oder in Bereichen, in denen das aufbereitete Wasser erhitzt oder konzentriert wird, verhindert oder zumindest deutlich reduziert.

Durch das Vorsehen eines das Lösungsverhalten des Mittels zur Reduzierung von Mineralausfällungen beeinflussenden zweiten Mediums, kann auf das Lösungsverhalten des Mittels zur Reduzierung von Mineralausfällungen zusätzlich eingewirkt werden.

In der erfindungsgemässen Ausführungsform wirkt das zweite Medium gegen die durch das erste Medium hervorgerufenen Erhöhung des Lösungsverhaltens des Mittels zur Reduzierung von Mineralausfällungen Damit kann während Zeiten der Stagnation von Wasser, oder bei Nichtdurchströmung der Wasseraufbereitungsvorrichtung, einer unerwünschten, überhöhten Konzentration an dem zur Reduzierung von Mineralausfällungen vorgesehenen Mittel im Wasser entgegengewirkt werden.

Dies erfolgt durch ein zweites Medium, das beispielsweise moderierend auf die Löslichkeit des Mittels oder auf die Konzentration des Mittels im Wasser wirkt. Dieser Moderator könnte z. B. so wirken, dass er während Stagnationsphasen, oder bei Nichtdurchströmung der Wasseraufbereitungsvorrichtung die Löslichkeit des Mittels zur Reduzierung von Mineralausfällungen reduziert und/oder eine erhöhte Konzentration des Mittels im Wasser abfängt und während der nächsten Entnahmephase oder Durchströmungsphase der Wasseraufbereitungsvorrichtung wieder abgibt.

Das Mittel zur Reduzierung von Mineralausfällungen könnte beispielsweise in einem Medium eingebettet sein, beispielsweise in einem festen Medium und/oder in einem immobilisierten Medium, das in bevorzugter Weise als Moderator wirkt.

Als Moderator haben sich bei Versuchen Anionenaustauscher als vorteilhaft erwiesen. Durch die Einbettung in einen Anionenaustauscher kann die Löslichkeit und/oder die Abgabemenge des Mittels an das Wasser und/oder die Konzentration des Mittels im Wasser moderiert werden. Als geeignete Anionenaustauscher sind stark basische, schwach basische oder mittelbasische Varianten geeignet. Weiterhin kann das zweite Medium einen pH-Anheber umfassen. Hierzu hat sich beispielsweise schwerlösliches Calciumcarbonat und oder Magnesiumcarbonat, z. B. in Form eines Granulates (Magnodol® etc.) als geeignet erwiesen. Dieses Granulat löst sich und reagiert alkalisch. In Stagnationsphasen kann dieses Mittel so den pH-Wert anheben. Durch die pH-Wert Anhebung wird die Löslichkeit des Mittels zur Reduzierung von Mineralausfällungen reduziert.

Da bei dem Lösungsprozess des pH-Anhebers Ca²⁺ und Mg²⁺ Ionen freigesetzt werden, kann sich zusätzlich die Löslichkeit des Mittels zur Reduzierung von Mineralausfällungen reduzieren, wenn es bevorzugt schwerlösliche Ca²⁺-, Mg²⁺-Salze, z. B. aus Ca²⁺-, Mg²⁺-Polyphosphat umfasst.

Gemäss den Regeln der Löslichkeit von Salzen in Wasser wird durch hohe Konzentration von Ca²⁺ und Mg²⁺ in Kontakt mit dem Mittel die Löslichkeit des Anions des Mittels vermindert (Löslichkeitsprodukt).

Es ist besonders vorteilhaft, wenn das zweite Medium zur Einbettung des Mittels zur Reduzierung von Mineralausfällungen aus einem Gemisch aus pH-Wert-Anheber und Moderator besteht, um die Löslichkeit des Mittels und/oder die Konzentration des Mittels zur Reduzierung von Mineralausfällungen im Wasser zu beeinflussen. Dies ist insbesondere während Stagnationsphasen, oder Nichtdurchströmungsphasen der Wasseraufbereitungsvorrichtung von Vorteil und/oder wenn die Löslichkeit eines Mittels zur Reduzierung von Mineralausfällungen über ein erstes Medium beeinflusst wird.

Auch möglich wäre der Einsatz eines Mittels zur Reduzierung von Mineralausfällungen, das selber im Sinne eines zweiten Mediums, z. B. als pH-Anheber wirkt.

Auch möglich wäre der Einsatz eines gasförmigen oder gasförmig wirkenden Mediums, beispielsweise um den pH-Wert im Wasser zu beeinflussen. Z. B. durch Bildung von Carbonsäure (Kohlensäure) durch Lösung von CO₂ im Wasser. Beispielsweise wäre auch möglich, den Kontakt zwischen dem ersten Medium und dem Mittel zur Reduzierung von Mineralausfällungen zu unterbrechen oder deutlich zu reduzieren, beispielsweise durch Freisetzung von CO₂ Gas, oder durch Gase jeglicher Art, z. B. Luft, um insbesondere bei Stagnationsphasen oder Nichtdurchströmung der Wasseraufbereitungsvorrichtung eine Überkonzentration des Mittels im verwendeten Wasser zu vermeiden.

Bei flüssigen und/oder sich mobil in der Wasseraufbereitungsvorrichtung verhaltenden Medien kann in bevorzugter Weise ein Mischraum für das erste und das zweite Medium vorgesehen sein, z. B. um diese so zu mischen, dass eine dem betreffenden Betriebszustand der Wasseraufbereitungsvorrichtung angepasste Einflussnahme auf das Lösungsverhalten des Mittels zur Reduzierung von Mineralausfällungen möglichst genau und möglichst rasch erfolgen kann.

In besonders bevorzugter Weise ist der Mischraum bzw. eine Strömungsführung für das erste und/oder das zweite Medium so ausgebildet, dass deren Mischungsverhältnis variabel ist. Beispielsweise kann bei Entnahmebetrieb, oder Durchströmung der Wasseraufbereitungsvorrichtung die Durchmischung der beiden Medien gering sein, so dass das erste Medium möglichst ungestört auf das Lösungsverhalten des Mittels zur Reduzierung von Mineralausfällungen einwirken, beispielsweise die Löslichkeit des Mittels und damit die Konzentration an Mittel im Wasser erhöhen kann und, damit die Wasseraufbereitungsvorrichtung optimal vor Mineralausfällungen schützt. Im Stagnationsbetrieb, oder bei Nichtdurchströmung der Wasseraufbereitungsvorrichtung kann demgegenüber eine starke Durchmischung des ersten mit dem zweiten Medium erfolgen, so dass hierdurch die Einwirkung des ersten Mediums auf das Lösungsverhalten des Mittels zur Reduzierung von Mineralausfällungen behindert, beispielsweise die Löslichkeit des Mittels und damit die Konzentration an Mittel zur Reduzierung von Mineralausfällungen in dem es umgebenden Wasser reduziert, insbesondere sogar deutlich reduziert und ein weiteres Lösen sogar weitgehend verhindert wird.

Dies kann in der Art erfolgen, dass das erste Medium einen pH-Wert aufweist, der die Löslichkeit des Mittels zur Reduzierung von Mineralausfällungen steigert und das zweite Medium einen pH-Wert aufweist, der dieser positiven Löslichkeitsbeeinflussung wieder entgegenwirkt, das Lösungsverhalten also wieder absenkt.

In der erfindungsgemässen Ausführungsform weist das erste Medium ein säuerndes Verhalten auf und das zweite Medium eine dieser ansäuernden Wirkung entgegenwirkende Eigenschaft. Das erste Medium kann hierbei beispielsweise ein erster, über eine Wasseraufbereitungsstrecke, beispielsweise über eine Entcarbonisierungsstrecke gefilterter Teilstrom des aufzubereitenden Wassers sein. Hierbei kann dieser angesäuert werden. Das zweite Medium kann demgegenüber ein vom ersten Teilstrom verschieden geführter, zweiter Teilstrom des aufzubereitenden Wasser sein. Dieser kann beispielsweise auch über eine Wasseraufbereitungsstrecke, insbesondere eine Filterstrecke geführt werden, beispielsweise um weitere Aufbereitungserfordernisse für das betreffende Wasser zu bewirken. Zum Beispiel Partikelfilterung, Schwermetallfilterung usw..

Der pH-Wert des ersten Mediums liegt in bevorzugter Weise während eines Entnahmebetriebs, oder während der Durchströmung der Wasseraufbereitungsvorrichtung in etwa im Bereich kleiner 6, insbesondere im Bereich von etwa 3, 3 bis 4,5.

Um die beiden Medien in entsprechender Weise dem zur Reduzierung von Mineralausfällungen vorgesehenen Mittel zuführen zu können, kann für dieses Mittel ein entsprechendes Aufnahmebehältnis vorgesehen sein. Der oben erwähnte Mischraum könnte beispielsweise durch entsprechend daran ausgebildete Strömungsführungen für Zu- und Ablauf des aufzubereitenden Wassers und insbesondere des ersten und/oder zweiten Mediums in dessen Inneren realisiert sein.

In bevorzugter Weise weist das Aufnahmebehältnis für das Mittel zur Reduzierung von Mineralausfällungen wenigstens einen ersten Einströmpfad für das erste Medium und wenigstens einen zweiten Einströmpfad für das zweite Medium auf. In vorteilhafter Weise liegt dabei in Strömungsrichtung der Einströmpfad für das zweite Medium näher an einem Ausströmpfad aus dem Aufnahmebehältnis als der Einströmpfad für das erste Medium. Dadurch wird erreicht, dass im Entnahmebetrieb, oder bei Durchströmung der Wasseraufbereitungsvorrichtung das zweite Medium nicht oder nur gering oder nur kurzzeitig mit dem Mittel zur Reduzierung von Mineralausfällungen in Kontakt gelangt. Demgegenüber kommt aber das erste Medium, das zur Einflussnahme auf das Lösungsverhalten des Mittels zur Reduzierung von Mineralausfällungen vorgesehen ist, stark und/oder länger mit ihm in Kontakt und kann so die Löslichkeit des Mittels und damit die Konzentration des Mittels zur Reduzierung von Mineralausfällungen im Wasser erhöhen.

Das Aufnahmebehältnis für das Mittel zur Reduzierung von Mineralausfällungen kann in bevorzugter Weise eine poröse Trennwand aufweisen. Insbesondere kann dieses auch als poröswandiger Körper ausgebildet sein. Zum Beispiel in der Form eines aus Kohle bestehenden Körpers, z. B. einer Hülse. Bei Verwendung von Aktivkohle kann hierbei gleichzeitig eine entsprechende Filterstrecke realisiert werden. Zur Einströmung der beiden Teilströme des aufzubereitenden Wassers, die das erste bzw. das zweite Medium darstellen, können die porösen Durchgänge in der Kohle für die Medienzufuhr genutzt werden. Hierbei kann in einer Ausführungsform eine stirnseitige Anströmung in dem dem Abfluss entfernten Bereich für das erste Medium in der Wasseraufbereitungsvorrichtung realisiert sein, und für das zweite Medium entweder in dem dem Abflussbereich nahen Stirnseitenbereich einer Hülse und/oder in dem diesen benachbarten Mantelbereich. In einer demgegenüber abgewandelten Ausführungsform kann auch eine komplette Umströmung des Aufnahmebehältnisses durch das erste und das zweite Medium vorgesehen sein, wobei in diesem Fall eine möglichst weit auseinanderliegende Zuleitung für das erste und das zweite Medium vorgesehen sind.

Die Einstellung des pH-Wertes des ersten Mediums kann beispielsweise über den Einsatz von Ionenaustauschern erfolgen. Die Ionenaustauscher können beispielsweise vorwiegend in Wasserstoffform vorliegende Kationenaustauscher, insbesondere schwachsaure Kationenaustauscher sein. Diese verändern den pH-Wert im ersten Medium, bzw. im Teilstrom des aufzubereitenden Wassers, der über die betreffende Kationenaustauscher-Strecke fließt. Während eines Entnahmebetriebs, also während der Zeit, in der der Teilstrom über den Kationenaustauscher fließt, wird dieser entsprechend angesäuert und dem Mittel zur Reduzierung von Mineralausfällungen zugeführt. Dadurch wird die Löslichkeit des Mittels zur Reduzierung von Mineralausfällungen und damit die Konzentration an Mittel im Wasser in der Weise erhöht, dass das gesamte durch die Wasseraufbereitungsvorrichtung fließende Wasser ausreichend aufbereitet ist, um Mineralausfällungen zu verhindern, oder zumindest stark zu reduzieren.

Das Mittel zur Reduzierung von Mineralausfällungen kann in einer bevorzugten Ausführung ein Komplexbildner sein, beispielsweise ein phosphathaltiger und/oder polyphosphathaltiger. Mögliche Zustandsformen sind hierbei kristallin, amorph und/oder andere.

Besonders bevorzugt als Mittel zur Reduzierung von Mineralausfällungen ist ein Mittel zur Behinderung der Kristallbildung, zum Beispiel ein Komplexbildner, beispielsweise Polyphosphat, der bei einem neutralen pH-Wert schwer löslich ist. Dadurch kann durch Beimischung von nicht angesäuertem Wasser vergleichsweise rasch eine Reduzierung oder Stabilisierung des Löseverhaltens des Mittels bei Stagnation oder bei Nichtdurchströmung der Wasseraufbereitungsvorrichtung bewirkt und eine überhöhte Konzentration des Mittels im Wasser verhindert werden. Unter einem Komplexbildner wird erfindungsgemäß ein Mittel beschrieben, dass Mineralien, insbesondere Metalle, wie z. B. Calcium, Magnesium, Barium, etc. bindet, deren Reaktion mit anderen Reaktionspartnern und deren Kristallbildung oder Ausfall in einer wässrigen Lösung behindert. Insbesondere zur Behinderung der Ausfällung von schwerlöslichen Erdalkaliverbindungen (z. B. Härte), oder zur Inhibierung von Korrosion, werden Komplexbildner, wie z. B. Phosphonate, Phosphorsäure, Triphosphate oder Polyphosphate eingesetzt, da sie schwerlösliche Verbindungen in Lösung halten bzw. in leicht lösliche Verbindungen überführen.

In bevorzugter Weise ist das Aufnahmebehältnis für das Mittel zur Reduzierung von Mineralausfällungen so in einer Wasseraufbereitungsvorrichtung angeordnet, dass wenigstens seine äußere Mantelfläche, vorzugsweise auch eine Fläche einer Stirnseite, in Kontakt mit dem ersten und/oder zweiten Medium steht, bzw. mit einem hieraus entstehenden Mediumgemisch. Hierzu kann das Aufnahmebehältnis z. B. in Form eines als Wechselpatrone ausgebildeten Elementes, insbesondere als ein Filterelement eingesetzt werden, bzw. in einem solchen angeordnet sein. Bevorzugt am Ende oder in einer Filterstrecke, die zur Ansäuerung des das erste Medium bildenden Teilstroms des aufzubereitenden Wassers vorgesehen ist.

Ein zweiter, beispielsweise ein das zweite Medium bildender Teilstrom kann beispielsweise so geführt sein, dass er z. B. als Bypassstrom zur Ansäuerungsstrecke des Filterelements geführt ist. Gemäß obiger Darlegung erfolgt die Zuleitung dieses Teilstroms des aufzubereitenden Wassers in der Nähe des Bereichs des Aufnahmebehältnisses für das Mittel zur Reduzierung von Mineralausfällungen, an welchem das aufzubereitende Wasser aus diesem ausgeleitet wird.

Um die Wasseraufbereitungsvorrichtung in ein Leitungssystem einbauen zu können, kann dieses in vorteilhafter Weise im Weiteren einen sogenannten Leitungsanschlusskopf umfassen. Solche Leitungsanschlussköpfe umfassen regelmäßig einen Zuleitungsanschluss, einen Ableitungsanschluss und üblicherweise einen Anschluss bzw. eine Aufnahme für ein strömungstechnisch zwischen diesen beiden Anschlüssen anzuordnendes Wechselelement, insbesondere Filterelement, z. B. eine Wechselfilterpatrone. Diese ist üblicherweise so ausgebildet, dass über die Zuführleitung aufzubereitendes Wasser in den Leitungsanschluss und weiter in das Filterelement einströmt, durch dieses hindurch, dabei das Wasser aufbereitet und anschließend über die Ablaufleitung am Leitungsanschlusskopf wieder in das damit bestückte Leitungssystem zurückgeführt wird. Damit können nachfolgend angeschlossene Geräte zuverlässig vor Mineralausfällungen geschützt werden. Zum Beispiel Haushaltsgeräte oder Geräte zur Herstellung und Aufbereitung von Speisen und/oder Getränken, wie Wasserkocher, Kaffeemaschinen, Dampfgarer, Geschirrspülmaschinen, Waschmaschinen, Dampfgeräte, insbesondere Dampfbügeleisen, Hochdruckreiniger, Luftreiniger und -konditionierer, Eismaschinen, insbesondere Eiswürfelmaschinen, Trinkwasserspender, Getränkeautomaten oder dergleichen.

In einer anderen Ausführungsform könnte die Wasseraufbereitungsvorrichtung einen Wassertank umfassen, insbesondere mit einem Filteranschlusselement, z.B. in der Ausführung einer Wasserfilterkanne, oder als Einheit einer Getränkemaschine, beispielsweise einer Heissgetränkemaschine, z. B. einer Kaffeemaschine. Damit können auch nicht leitungsgebundene Geräte mit entsprechend aufbereitetem Wasser versorgt werden.

In einer weiter abgewandelten Ausführungsform könnte die Wasseraufbereitungsvorrichtung auch ein direkt zum Anschluss an ein Gerät vorgesehenes Anschlusselement aufweisen. Damit könnte ein entsprechend vorgesehenes Gerät entweder über eine Leitung oder einen Wassertank unter Zwischenschaltung einer erfindungsgemäßen Wasseraufbereitungsvorrichtung vor Ablagerungen durch Mineralausfällungen geschützt werden.

### Ausführungsbeispiel:

Die beigefügten Figuren zeigen rein beispielhaft und schematisch mögliche Ausführungsbeispiele. Hierbei zeigen
- Figur 1: ein mit einem Mittel zur Reduzierung von Mineralausfällungen befülltes Behältnis,
- Figur 2: ein mit einem Behältnis gemäß Figur 1 bestücktes Wasserfilterelement,
- Figur 3: eine Wasseraufbereitungsvorrichtung mit einem Leitungsanschlusskopf,
- Figur 4: eine Wasseraufbereitungsvorrichtung mit einem Wassertank
- Figur 5: eine Wasseraufbereitungsvorrichtung mit einem Anschlusselement zum Anschluss an ein Gerät.
- Figur 6: ein mit einem in einem festen oder immobilisierten Medium eingebetteten Mittel zur Reduzierung von Mineralausfällungen bestücktes Wasserfilterelement
- Figur 7: eine Wasseraufbereitungsvorrichtung in einer Wasserfilterkanne
- Figur 8: ein mit einem Mittel zur Reduzierung von Mineralausfällungen befülltes Behältnis mit möglichst weit auseinanderliegenden Zuleitungen für die Medien und einer kompletten Umströmung
- Figur 9a: eine Wasseraufbereitungsvorrichtung mit einem Wassertank bei Durchströmung, und
- Figur 9b: eine Wasseraufbereitungsvorrichtung mit einem Wassertank bei Nichtdurchströmung.

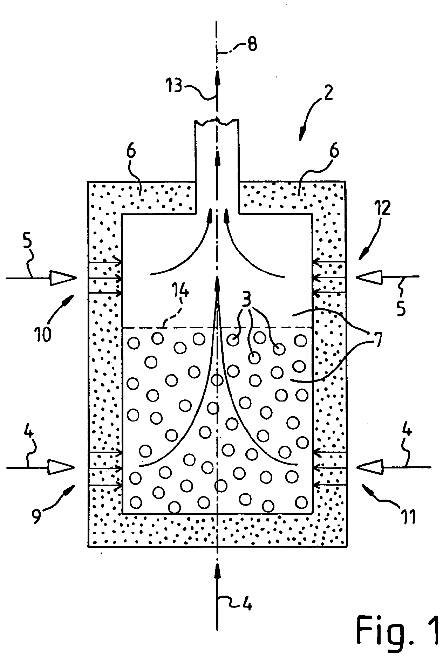

Demgemäß zeigt die Figur 1 als Teil einer Wasseraufbereitungsvorrichtung 1 ein Aufnahmebehältnis 2 für ein Mittel 3 zur Reduzierung von Mineralausfällungen. Symbolisch durch Pfeile dargestellt sind Strömungspfade für ein erstes, das Lösungsverhalten des Mittels zur Reduzierung von Mineralausfällungen beeinflussendes Medium 4, sowie für ein zweites, ebenfalls das Lösungsverhalten des Mittels zur Reduzierung von Mineralausfällungen beeinflussendes Medium 5. Das durch eine vorzugsweise poröse Wandung 6 gebildete Aufnahmebehältnis 2 bildet in seinem Inneren einen Mischraum 7 für das erste und zweite Medium 4, 5 aus.

Links der symbolisch dargestellten Achse 8 sind beispielhaft Punkte zur Symbolisierung eines porösen, das Aufnahmebehältnis 2 ausbildenden Materials dargestellt. Je nach Ausbildung und Anordnung von Zuführungen für das erste und das zweite Medium 4, 5 können diese über die gesamte Länge der Wand 6 in den Innenraum des Aufnahmebehältnisses 2 einströmen. Pfeile 9, 10 stellen wiederum symbolisch einen bevorzugten Durchtrittsbereich für das betreffende Medium 4, 5 durch die Wandung 6 dar. Dieser kann sich entweder durch eine in diesem Bereich mündende Zufuhrstrecke ausbilden und/oder gegebenenfalls auch durch entsprechende Maßnahmen verursacht sein, wie z. B. durch eine gezielte Abstimmung der Strömungsverhalten beider Medien oder durch eine erhöhte Durchlässigkeit der Wand 6 in diesen Bereichen gegenüber übrigen Wandbereichen und/oder Stirnseiten.

Alternativ zu einer porösen Ausführungsform einer Wandung 6 kann eine solche auch undurchlässig ausgebildet sein und in entsprechenden Bereichen, wie beispielhaft auf der rechten Seite durch die Pfeile 11, 12 symbolisch dargestellt, entsprechend präparierte Durchlassbereiche aufweisen. Damit ist eine gezielte Strömungsführung für die beiden Medien 4, 5 möglich. Im Entnahmebetrieb, also bei vergleichsweise guter Durchströmung können dabei sichergestellt werden, dass das Mittel 3 zur Reduzierung von Mineralausfällungen im Wesentlichen nur vom ersten Medium 4 umströmt wird und das zweite Medium 5 im Wesentlichen direkt und ohne Einwirkung auf das Mittel 3 dem Ausgangsstrom des aufbereiteten Wassers beaufschlagt wird. Ein Rückhaltemittel 14, z. B. in der Form eines Siebes, eines Gitters, eines Gewebes oder eines anderen, fluiddurchlässigen Materials, kann die Trennung der beiden Medienströme 4, 5 zusätzlich durch Rückhaltung des Mittels 3 im ausgangsferneren Abschnitt des Mischraums 7 unterstützen.

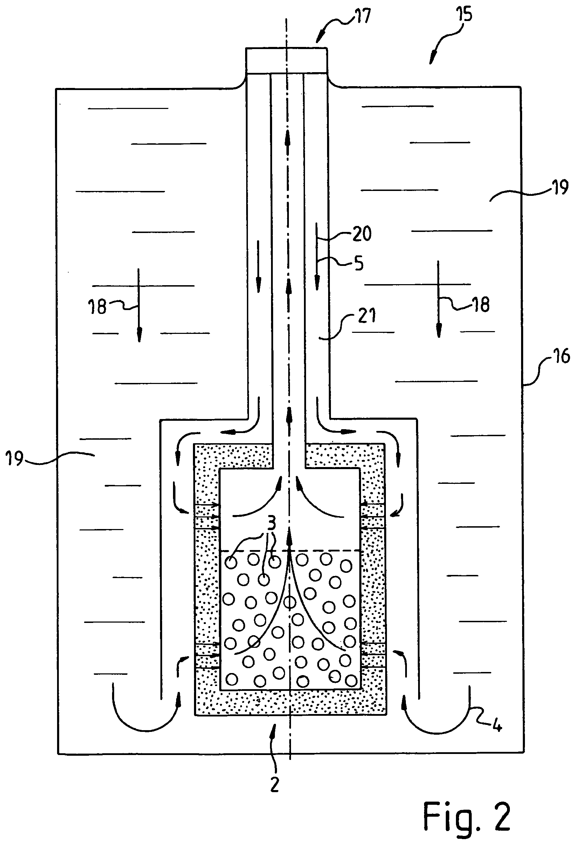

Die Figur 2 zeigt ein Filterelement 15 mit einem Gehäuse 16, einem Anschlusselement 17 und einem darin angeordneten Aufnahmebehälter 2 gemäß der Darstellung der Figur 1. Ein erster Teilstrom 18 des von der Wasseraufbereitungsvorrichtung 1 aufzubereitenden Wassers fließt über eine Aufbereitungsstrecke 19 und bildet an deren Ausgang das erste Medium 4. Die Aufbereitungsstrecke 19 kann beispielsweise einen pH-Absenker, z. B. ein Kationenaustauscher, insbesondere einen sauren, beispielsweise einen schwach sauren Kationentauscher aufweisen, z. B. in der Form eines Harzes. Nach Durchströmen der Aufbereitungsstrecke 19 bildet dieser erste Teilstrom das erste Medium 4 aus. Ein zweiter, vom ersten Teilstrom getrennt geführter, z. B. als Bypass 21 zur Aufbereitungsstrecke 19, bildet das zweite Medium 5 aus.

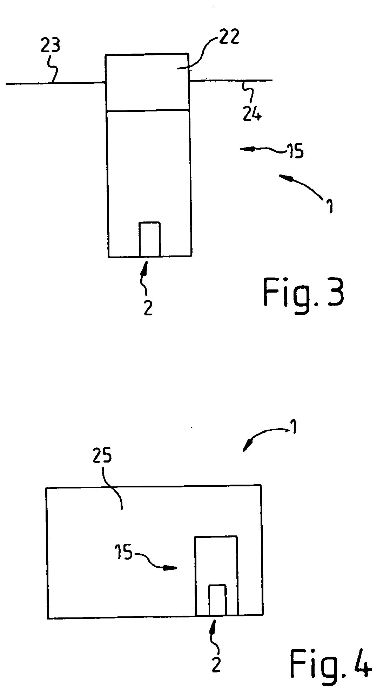

Die Figur 3 zeigt beispielhaft und schematisch eine Wasseraufbereitungsvorrichtung 1 mit einem Leitungsanschlusskopf 22, einer Zuleitung 23, einer Ableitung 24 sowie einem daran angeschlossenen Filterelement 15 mit mindestens einem ersten Medium 4 und einem darin angeordneten Mittel zur Reduzierung von Mineralausfällungen 3.

Die Figur 4 zeigt eine Wasseraufbereitungsvorrichtung 1, umfassend einen Wassertank 25 und wiederum ein Filterelement 15 mit mindestens einem ersten Medium 4 und einem Mittel zur Reduzierung von Mineralausfällungen 3.

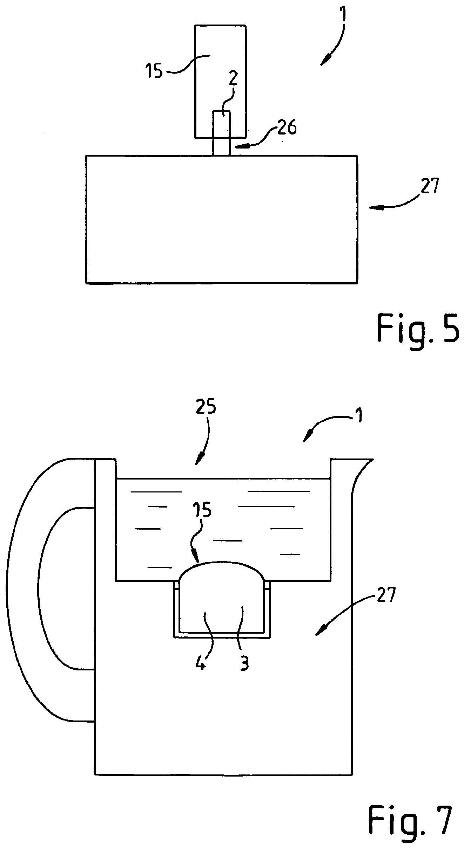

Die Figur 5 zeigt eine weitere Ausführungsform einer Wasseraufbereitungsvorrichtung 1, umfassend ein Filterelement 15 mit mindestens einem ersten Medium 4 und einem Mittel zur Reduzierung von Mineralausfällungen 3 und einem Anschlusselement 26 zum Anschluss an ein damit zu versorgendes Gerät 27.

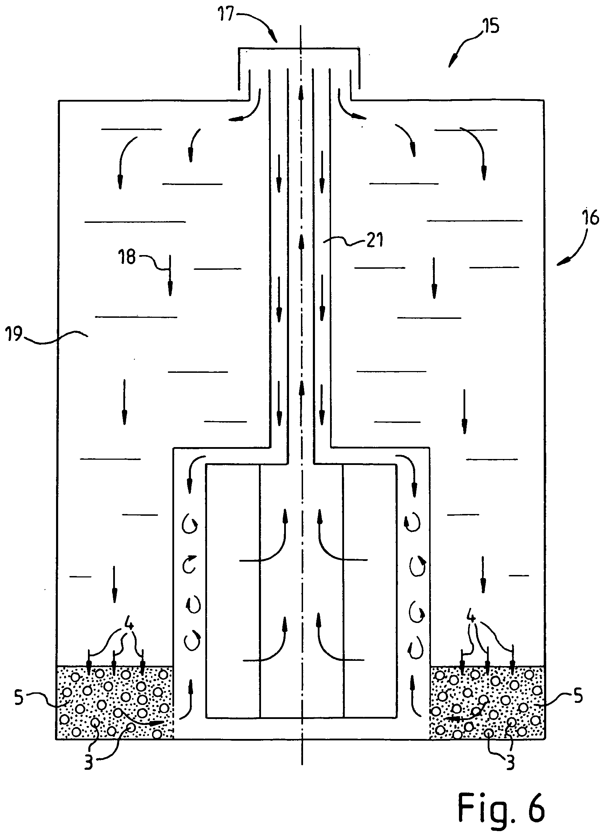

Die Figur 6 zeigt ein Filterelement 15 mit einem Gehäuse 16, einem Anschlusselement 17 und einem festen und/oder immobilisiert angeordneten zweiten Medium 5, in dem eingebettet ein Mittel zur Reduzierung von Mineralausfällungen 3 angeordnet ist. Es ist auch möglich, dass das Mittel 3 in Strömungsrichtung vor dem und/oder nach dem zweiten Medium 5 angeordnet ist. Ein erster Teilstrom 18 des von der Wasseraufbereitungsvorrichtung 1 aufzubereitenden Wassers fließt über eine Aufbereitungsstrecke 19 und bildet an deren Ausgang das erste Medium 4. Die Aufbereitungsstrecke 19 kann einen sauren, oder schwach sauren Kationentauscher aufweisen, z. B. in der Form eines Harzes. Das Medium 4 fliesst dann über das Mittel zur Reduzierung von Mineralausfällungen 3 und dem es umgebenden zweiten Medium 5. Das zweite Medium 5 kann z. B. ein basisch wirkendes Medium sein, beispielsweise ein basischer, oder schwachbasischer Anionenaustauscher und/oder ein pH-Anheber, beispielsweise schwerlösliches Calcium- und oder Magnesiumcarbonat und/oder ein anderes auf das Mittel zur Reduzierung von Mineralausfällungen lösungshemmend, lösungsmoderierend oder im Wasser konzentrationsmoderierend wirkendes Medium. Ein zweiter, vom ersten Teilstrom getrennt geführter, z. B. als Bypass 21 zur Aufbereitungsstrecke 19 geführter Teilstrom, mischt sich mit dem ersten Teilstrom in Strömungsrichtung nach dem Mittel zur Reduzierung von Mineralausfällungen.

Als eine weiterführende Variante kann auch die Mischung beider Teilströme im Bereich des Mittels zur Reduzierung von Mineralausfällungen 3 zur weiteren Beeinflussung des Löslichkeitverhaltens des Mittels 3 in Kombination mit dem zweiten Medium 5 vorgesehen sein.

In einer weiteren Ausführungsform kann das aufzubereitende Wasser der Wasseraufbereitungsvorrichtung 1 vollständig über eine Aufbereitungsstrecke 19 geleitet werden, an deren Ausgang sich das erste Medium 4 bildet, das dann über das Mittel zur Reduzierung von Mineralausfällungen 3 oder in einer weiterführenden Form über das Mittel 3 in Kombination mit einem zweiten Medium 5 fliesst.

Die Figur 7 zeigt eine Wasseraufbereitungsvorrichtung 1, umfassend einen Wassertank 25, ein Filterelement 15 und einen Filtratlagertank 27. Das Filterelement 15 umfasst mindestens ein erstes Medium 4 und ein Mittel zur Reduzierung von Mineralausfällungen 3.

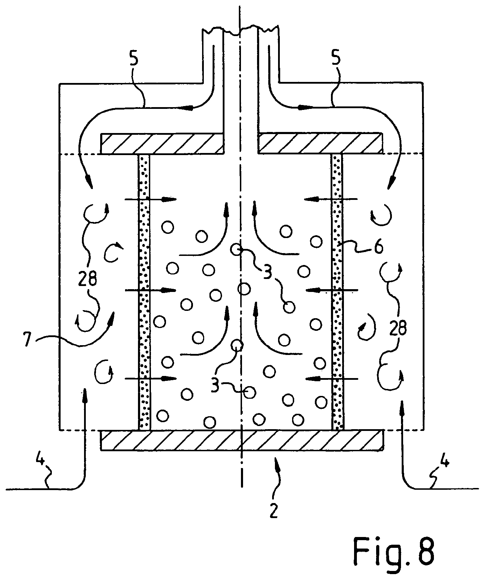

Die Figur 8 als Teil einer Wasseraufbereitungsvorrichtung 1 zeigt ein Aufnahmebehältnis 2 für ein Mittel 3 zur Reduzierung von Mineralausfällungen. Symbolisch durch Pfeile 4 dargestellt sind Strömungspfade für ein erstes, das Lösungsverhalten des Mittels zur Reduzierung von Mineralausfällungen beeinflussendes Medium 4, sowie für ein zweites, ebenfalls das Lösungsverhalten des Mittels zur Reduzierung von Mineralausfällungen beeinflussendes Medium 5. Der das Aufnahmebehältnis 2 umgebende Raum bildet den Mischraum 7 für das erste und zweite Medium 4 und 5 aus. Die Mischung der beiden Medien 4 und 5 ist symbolisch durch Pfeile 28 dargestellt.

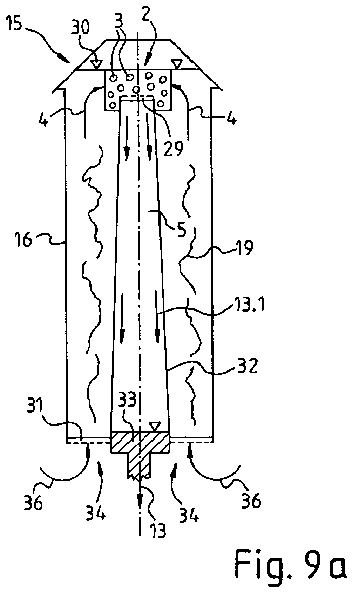

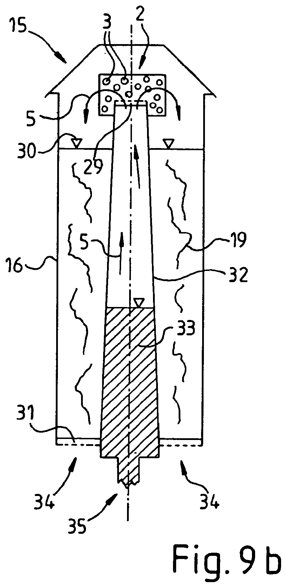

Die Figuren 9a und 9b zeigen rein beispielhaft und schematisch ein Filterelement 15 einer Wasseraufbereitungsvorrichtung, beispielsweise bestehend aus dem Filterelement 15 und einem Wassertank oder einem Gerät, in aufgeschnittener Darstellung in zwei verschiedenen Betriebszuständen. Figur 9a zeigt eine Darstellung im Betriebszustand und Figur 9b eine Darstellung in Stagnationszustand.

In beiden Darstellungen umfasst das Filterelement 15 ein Gehäuse 16, eine im Inneren des Gehäuses angeordnete Leitung 32, zum Beispiel in Form eines Rohres, eine Einlassöffnung 34 und eine Auslassöffnung 35. Die Einlassöffnung 34 liegt zwischen Gehäuse 16 und der Wandung der Leitung 32 und kann ein Rückhaltemittel 31 umfassen, zum Beispiel in der Form eines Siebes. Die Auslassöffnung 35 ist im Endbereich der Leitung 32 ausgebildet. Sie kann entweder direkt dessen Endbereich sein, oder aber auch in der Form einer Querschnittsveränderung ausgebildet sein, beispielsweise eine Querschnittsreduzierung. In vorteilhafter Weise kann an diesem Endbereich der Leitung auch ein Anschlussstück zum Anschluss des Filterelementes 15 ausgebildet sein, zum Beispiel an einen Tank.

Im Einlassbereich des Filterelementes 15, also der Öffnung 34 kann ein Rückhaltemittel 31 für im Zwischenraum zwischen Gehäuse 16 und Leitung 32 angeordnetes Filtermaterial vorgesehen sein. An der dem Auslass gegenüberliegenden Seite der Leitung 32, im Inneren des Gehäuses 16, ist ein Aufnahmebehältnis 2 angeordnet, welches Mittel 3 zur Reduzierung von Mineralausfällungen enthält. Dieses Aufnahmebehältnis 2 kann beispielsweise eine Vertiefung aufweisen, in welche die Leitung 32 eingesteckt werden kann, bzw. umgekehrt, mittels welcher das Aufnahmebehältnis 2 auf die Leitung 32 aufgesetzt bzw. aufgesteckt werden kann. Gegebenenfalls kann zwischen dem Aufnahmebehältnis 2 und der Leitung 32 ein weiteres Rückhaltemittel 29 vorgesehen sein, um zum Beispiel den Durchtritt von Partikeln zu verhindern oder das Aufnahmebehältnis selber kann als Rückhaltemittel für Partikel wirken.

Der Zulauf 36 des durch das Filterelement aufzubereitenden Wassers ist in der Figur 9a im Einlassbereich symbolisch durch zwei Pfeile dargestellt. Das eindringende Wasser fließt in Strömungsrichtung durch die Aufbereitungsstrecke 19 und bildet durch Kontakt mit diesem das ersten Medium 4. Die Aufbereitungsstrecke kann beispielsweise einen pH-Absenker, z. B. einen Kationenaustauscher, insbesondere einen schwach sauren Kationenaustauscher aufweisen, z. B. in der Form eines Harzes. Das erste Medium 4 fliesst in Strömungsrichtung weiter und dringt in das Aufnahmebehältnis 2 ein und kann dann auf das darin angeordnete Mittel 3 zur Reduzierung von Mineralausfällungen derart einwirken, dass das durchfließende Wasser in der gewünschten Weise aufbereitet wird und optimal vor Mineralausfällungen schützt. Es tritt anschließend im Inneren des Aufnahmebehältnisses in Richtung der Leitung 32 aus und fließt an deren Innenwandung, beispielsweise als Randstrom in der Form eines Wasserfilms zur Auslassöffnung 35.

In der Betriebsdarstellung gemäß Figur 9a ist eine verhältnismäßig geringe Menge an Filtrat 33 im Auslassbereich der Leitung 32 dargestellt. Dieses ergibt sich durch den Entnahme bedingten Abfluss in Richtung des das Wasser verwendenden Geräts. Üblicherweise werden für die Entnahme des aufbereiteten Wassers, also des Filtrats Saugpumpen verwendet. Solche Pumpen erzeugen während des Betriebs einen Unterdruck im Leitungssystem, welcher seinerseits weiteres aufzubereitendes Wasser zum Beispiel aus einem Tank, in dem das Filterelement 15 eingesetzt ist, nachziehen kann. Das Niveau des in der Filterpatrone befindlichen Wassers steigt im Betriebsfall soweit an, dass eine Durchströmung des Filterelementes erfolgt. Beispielhaft ist in der Figur 9a ein Niveau 30 eingezeichnet, welches im Bereich der Oberkante des Aufnahmebehältnisses 2 liegt.

Im Inneren der Leitung 32 befindet sich das zweite Medium 5, welches beispielsweise Luft oder ein CO₂ Gasgemisch sein kann. Während des Betriebszustandes gemäß der Darstellung der Figur 9a wird dieses zweite Medium aufgrund der Volumenänderung im Inneren der Leitung 32 durch Abfluss des darin angestauten Filtrats 33 in Richtung Abfluss hin gezogen. Im Stagnationsfall oder in Nichtdurchströmungsphasen gemäß der Darstellung der Figur 9b sammelt sich aufgrund fehlender Entnahme das Filtrat 33 im Auslassbereich der Leitung 32 wieder an, reduziert damit das für das zweite Medium zur Verfügung stehende Volumen und drängt damit dieses entgegen der Betriebsstromrichtung des Filterelementes in Richtung des Aufnahmebehältnisses 2 und durch dieses hindurch in Richtung Aufbereitungsstrecke 19, die sich zwischen der Außenwandung der Leitung 32 und dem Gehäuse 16 befindet.

Eine beispielhafte Darstellung eines Niveaus 30, im Fall eines Strömungsgleichgewichtes vor und nach dem Aufnahmebehältnis 2, ist in der Figur 9b beispielhaft unterhalb der Unterkante des Aufnahmebehältnisses 2 eingezeichnet. In diesem Fall ist das Mittel 3 zur Reduzierung von Mineralausfällungen vom zweiten Medium beaufschlagt und wird von diesem entsprechend beeinflusst. In diesem Ausführungsbeispiel, in dem als zweites Medium Luft bzw. ein CO₂ Gasgemisch vorgesehen ist, wird der Kontakt des Mittels 3 mit dem ersten Medium 4 unterbrochen oder reduziert. In dieser Folge wirkt das zweite Medium 5 beispielsweise durch eine entsprechende Reduzierung des Feuchtigkeitsgehalts im Aufnahmebehältnis 2 und/oder durch eine Reduzierung oder Behinderung des Kontaktes zwischen dem Mittel 3 und dem ersten Medium 4 auf das Löslichkeitsverhalten des Mittels 3 und/oder auf die Konzentration des Mittels im Wasser. Dadurch wird in Stagnationsphasen oder in Nichtdurchströmungsphasen des Filterelementes eine überhöhte Konzentration des Mittels im aufbereiteten Wasser verhindert. Das Mittel 3 kann sich bei nächster Entnahme von Wasser oder bei Durchströmung des Filterelementes aufgrund der zuvor stromförmig erfolgten Wandlung des aufzubereitenden Wassers in ein erstes Medium 4 (zum Beispiel durch Ansäuerung) dann kurzzeitig wieder in ausreichender Konzentration im Wasser lösen.

Wenn im nachfolgenden Betriebsfall in der betriebsgemäßen Strömungsrichtung wieder aufzubereitendes Wasser durch das Filterelement fließt, und damit der Pegel 30 wieder ansteigt, bis das durch das Filtermaterial fliessende Wasser das erste Medium 4 bildet und dieses wieder in das Aufnahmebehältnis 2 eindringt und damit in Kontakt mit dem Mittel 3 zur Reduzierung von Mineralausfällungen kommt, kann das Mittel 3 wiederum so beeinflusst werden, dass das aufzubereitende Wasser in der entsprechend gewünschten Qualität aus dem Aufnahmebehältnis 2 austreten und an der Öffnung 35 zur Entnahme entsprechend bereit stehen kann.

Nachfolgend werden noch weitere Informationen zu möglichen Ausführungsformen angegeben.

Besonders schwerlösliche Polyphosphatsalze weisen eine ausgeprägte Abhängigkeit ihrer Löslichkeit vom pH-Wert der sie umgebenden Flüssigkeit auf.
Die folgende Tabelle stellt beispielhaft das Löseverhalten von schwerlöslichen Polyphosphatsalzen über Nacht in Wasser bei unterschiedlichen pH-Werten des Wassers dar.

| pH | Konzentration Polyphoshat |
|---|---|
| 4.0 | 60 mg/l |
| 5.0 | 10 mg/l |
| 6.0 | 4 mg/l |
| 7.0 | 2 mg/l |

Diese Eigenschaft wird für eine Erhöhung der Menge an gelösten Komplexbildnern, wie z. B. Polyphosphat, in einen kontinuierlich oder semikontinuierlich eine Apparatur mit schwer löslichen Komplexbildnern, z. B. schwerlöslichen Polyphosphatsalzen, durchströmenden Wasserstrom genutzt, indem eine vorherige Ansäuerung des Wasserstroms gezielt vorgenommen wird. Durch die vorherige Ansäuerung wird die Löslichkeit des schwerlöslichen Komplexbildners bzw. des schwerlöslichen Polyphosphatsalzes spontan erhöht.

In einer besonderen Ausführungsform wird der Wasserstrom in mindestens zwei Teilströme aufgeteilt, von denen mindestens ein Teilstrom angesäuert über eine Apparatur mit schwerlöslichem Komplexbildner, z. B. schwerlöslichen Polyphosphatsalzen, geleitet wird. Dieser Teilstrom, der bevorzugt 5 bis 50% des Gesamtvolumenstroms ausmacht, wird nach Durchströmung der Apparatur mit den übrigen Teilströmen wieder zusammengeführt. Dadurch lässt sich eine gezielte Konzentrationsbeeinflussung an gelöstem Komplexbildner, beispielsweise Polyphosphat, auch bei kontinuierlichem Durchsatz bewirken, um einen wirksamen Schutz bzw. eine effektive Reduktion von Mineralausfällungen, wie z. B. von Calciumcarbonat zu erreichen.

In einer weiteren bevorzugten Ausführung ist die Apparatur so ausgelegt, dass bei Unterbrechung des kontinuierlichen oder semikontinuierlichen Volumenstroms das mit dem Komplexbildner in Kontakt stehende angesäuerte Wasser neutralisiert wird, beispielsweise dadurch, dass das nicht angesäuerte Wasser, z. B. über Diffusion, mit dem angesäuerten Wasser zusammenströmt und derart neutralisiert, dass der Mischungs-pH-Wert wieder ansteigt und bevorzugt zwischen pH 5,5 und pH 7 liegt. Durch diese Art von Selbststeuerung wird die Abgabe überhöhter Mengen an Komplexbildnern, beispielsweise an Polyphosphat, auch während längerer Stagnationszeiten, z. B. während der Nacht oder während der Wochenenden und eine Überschreitung zulässiger Höchstwerte vermieden.

Bei einer weiter bevorzugten Ausführungsform kann die Bereitstellung von angesäuertem Rohwasser durch Filtration eines Teilstroms über einen vorwiegend in der Wasserstoffform vorliegenden schwach sauren Kationenaustauscher vorgesehen sein. Aufgrund der Chemie dieses Austauschers hat dieses Wasser innerhalb des für die Anwendung spezifizierten Durchströmungsbereichs nahezu unabhängig vom Durchsatz einen pH-Wert von 3.3 - 4.5. Der angesäuerte Teilstrom wird von einer Seite, z. B. radial, durch die poröse Wand einer perforierten Hülse, die mit Polyphosphat komplett oder nur teilweise gefüllt ist, (z. B. ein Kohleblockfilter) eingeleitet. Gleichzeitig wird von der gegenüberliegenden Seite Rohwasser oder nicht angesäuertes Wasser eingeleitet. Durch die simultane Einleitung beider Volumenströme im kontinuierlichen Betrieb findet kaum eine Vermischung des Rohwassers, bzw. des nicht angesäuerten Wassers mit angesäuertem Wasser in der Eintrittszone des angesäuerten Wassers und damit im Bereich der Polyphosphatfüllung statt, so dass das mit der Polyphosphatfüllung in Kontakt tretende Wasser einen ausreichend abgesenkten pH-Wert für eine gezielte Erhöhung der Löslichkeit des Polyphosphats während der zur Verfügung stehenden Kontaktzeit aufweist. Bei der Ableitung des mit Polyphosphat angereicherten angesäuerten Wassers aus der Hülse vermischt sich das mit Polyphosphat angereicherte angesäuerte Wasser mit dem nicht angesäuerten Wasser in der Hülse und bildet ein Mischwasser mit angestrebter Polyphosphatkonzentration. Dadurch werden auch bei Einsatz von schwerlöslichem Polyphosphat im kontinuierlichen Betrieb der Apparatur ausreichende Konzentrationen an gelöstem Polyphosphat im Mischwasser erreicht.

### Bezugszeichenliste:

- 1: Wasseraufbereitsungsvorrichtung
- 2: Aufnahmebehältnis
- 3: Mittel zur Reduzierung von Mineralausfällungen
- 4: erstes Medium
- 5: zweites Medium
- 6: Wandung
- 7: Mischraum
- 8: Achse
- 9: Pfeil
- 10: Pfeil
- 11: Pfeil
- 12: Pfeil
- 13: Ausgangsstrom
- 14: Rückhaltemittel
- 15: Filterelement
- 16: Gehäuse
- 17: Anschlusselement
- 18: Teilstrom
- 19: Aufbereitungsstrecke
- 20: Teilstrom
- 21: Bypass
- 22: Leitungsanschlusskopf
- 23: Zuleitung
- 24: Ableitung
- 25: Wassertank
- 26: Anschlusselement
- 27: Filtratlagertank
- 28.: Pfeil
- 29: Rückhaltemittel
- 30: Niveau
- 31: Rückhaltemittel
- 32: Leitung
- 33: Filtrat
- 34: Einlassöffnung
- 35: Auslassöffnung
- 36: Zulauf

## Patentansprüche

1. Verfahren zur Aufbereitung von Wasser mittels einer Wasseraufbereitungsvorrichtung (1), indem in der Wasseraufbereitungsvorrichtung (1) ein in fester Form vorliegendes Mittel (3) zur Reduzierung von Mineralausfällungen angeordnet wird, **dadurch gekennzeichnet, dass** ein das Lösungsverhalten des Mittels zur Reduzierung von Mineralausfällungen beeinflussendes, erstes Medium (4) verwendet wird, wobei das erste Medium (4) durch das aufzubereitende Wasser beim Durchfließen und durch Kontakt mit einer Aufbereitungsstrecke (19) gebildet wird, wobei die Aufbereitungsstrecke (19) dazu ausgebildet ist, den pH-Wert des aufzubereitenden Wassers zu beeinflussen, um die Löslichkeit des Mittels (3) zur Reduzierung von Mineralausfällungen und dessen Konzentration im Wasser während Zeiten der Entnahme von Wasser oder bei Durchströmung der Wasseraufbereitungsvorrichtung zu steigern, und wobei ein zweites Medium (5) zur Beeinflussung der Löslichkeit des Mittels (3) zur Reduzierung von Mineralausfällungen und dessen Konzentration im Wasser verwendet wird, um die Löslichkeit des Mittels (3) und dessen Konzentration im Wasser während Zeiten der Stagnation von Wasser oder bei Nichtdurchströmung der Wasseraufbereitungsvorrichtung zu senken.

2. Verfahren zur Aufbereitung von Wasser mittels einer Wasseraufbereitungsvorrichtung, nach Anspruch 1, **dadurch gekennzeichnet, dass** das erste und das zweite Medium (4, 5) in einem Mischraum (7) vermischt werden.

3. Verfahren zur Aufbereitung von Wasser mittels einer Wasseraufbereitungsvorrichtung nach einem der vorangehenden Ansprüche, **dadurch gekennzeichnet, dass** das erste Medium durch einen ersten, über eine Wasseraufbereitungsstrecke (19) geführten Teilstrom (18) des aufzubereitenden Wassers gebildet wird, und/oder dass das zweite Medium durch einen vom ersten Teilstrom verschieden geführten, zweiten Teilstrom (20) des aufzubereitenden Wassers gebildet wird.

4. Verfahren zur Aufbereitung von Wasser mittels einer Wasseraufbereitungsvorrichtung nach einem der vorangehenden Ansprüche, **dadurch gekennzeichnet, dass** der pH-Wert des ersten Mediums über den Einsatz von Ionenaustauschern verändert wird, insbesondere über den Einsatz von vorwiegend in Wasserstoffform vorliegenden Kationenaustauschern.

5. Verfahren zur Aufbereitung von Wasser mittels einer Wasseraufbereitungsvorrichtung nach einem der vorangehenden Ansprüche, **dadurch gekennzeichnet, dass** zur Reduzierung von Mineralausfällungen ein phosphathaltiges Mittel bzw. Polyphosphat verwendet wird.

6. Verfahren zur Aufbereitung von Wasser mittels einer Wasseraufbereitungsvorrichtung nach einem der vorangehenden Ansprüche, **dadurch gekennzeichnet, dass** das erste Medium über wenigstens einen ersten Einströmpfad (9, 11) in ein Aufnahmebehältnis für das Mittel zur Reduzierung von Mineralausfällungen geführt wird und das zweite Medium über wenigstens einen zweiten Einströmpfad (10, 12).

7. Verfahren zur Aufbereitung von Wasser mittels einer Wasseraufbereitungsvorrichtung nach einem der vorangehenden Ansprüche, **dadurch gekennzeichnet, dass** das erste und/oder zweite Medium, bzw. ein hieraus entstehendes Mediumgemisch (4, 5) in Kontakt wenigstens mit der äußeren Mantelfläche, vorzugsweise auch einer Fläche einer Stirnseite des Aufnahmebehältnisses für das Mittel zur Reduzierung von Mineralausfällungen gebracht wird .

8. Verfahren zur Aufbereitung von Wasser mittels einer Wasseraufbereitungsvorrichtung nach einem der vorangehenden Ansprüche, **dadurch gekennzeichnet, dass** das Medium als Löslichkeitsmoderator auf das Mittel zur Reduzierung von Mineralausfällungen (3) und/oder als Konzentrationsmoderator auf das Mittel zur Reduzierung von Mineralausfällungen (3) im Wasser wirkt.

9. Verfahren zur Aufbereitung von Wasser mittels einer Wasseraufbereitungsvorrichtung nach einem der vorangehenden Ansprüche, **dadurch gekennzeichnet, dass** als zweites Medium ein Anionenaustauscher, insbesondere ein schwach basischer Anionenaustauscher verwendet wird.

10. Verfahren zur Aufbereitung von Wasser mittels einer Wasseraufbereitungsvorrichtung nach einem der vorangehenden Ansprüche, **dadurch gekennzeichnet, dass** als zweites Medium ein pH-Anheber, insbesondere ein schwerlösliches Salz, z. B. Calcium- oder Magnesiumcarbonat verwendet wird.

11. Verfahren zur Aufbereitung von Wasser mittels einer Wasseraufbereitungsvorrichtung nach einem der vorangehenden Ansprüche, **dadurch gekennzeichnet, dass** das zweite Medium gasförmig oder gasförmig wirkt.

12. Verfahren zur Aufbereitung von Wasser mittels einer Wasseraufbereitungsvorrichtung nach einem der vorangehenden Ansprüche, **dadurch gekennzeichnet, dass** als Wasseraufbereitungsvorrichtung ein Leitungsanschlusskopf (22) und eine Wechselfilterkartusche verwendet werden.

13. Verfahren zur Aufbereitung von Wasser mittels einer Wasseraufbereitungsvorrichtung nach einem der vorangehenden Ansprüche 1 bis 11, **dadurch gekennzeichnet, dass** ein Wassertank (25) verwendet wird.

14. Verfahren zur Aufbereitung von Wasser mittels einer Wasseraufbereitungsvorrichtung nach einen der vorangehenden Ansprüche, **dadurch gekennzeichnet, dass** zur Behinderung der Ausfällung von schwerlöslichen Erdalkaliverbindungen (z. B. Härte), oder zur Inhibierung von Korrosion, Komplexbildner, wie z. B. Phosphonate, Phosphorsäure, Triphosphate oder Polyphosphate verwendet werden.

15. Verfahren zur Aufbereitung von Wasser mittels einer Wasseraufbereitungsvorrichtung nach einen der vorangehenden Ansprüche, **dadurch gekennzeichnet, dass** die Wasseraufbereitungsvorrichtung für die Speisung von wasserführenden und/oder Wasser erhitzenden Haushaltsgeräten, oder Geräten zur Herstellung und Aufbereitung von Speisen und/oder Getränken mit aufbereitetem Trinkwasser, wie Getränkeautomaten, Kaffeeautomaten, Eismaschinen, Koch- und Backgeräte, Dampferzeuger oder Hochdruckreiniger, Luftkonditionierer oder dergleichen mit aufbereitetem Wasser verwendet wird.

## Claims

1. A method for the treatment of water by means of a water treatment device (1) by arranging in the water treatment device (1) a solid mineral precipitation reducing agent (3), **characterised in that** a first medium (4) affecting the solubility behaviour of the mineral precipitation reducing agent is used, wherein the first medium (4) is formed by the water to be treated when flowing through and by contact with a treatment line (19), wherein the treatment line (19) is adapted to affect the pH value of the water to be treated in order to increase the solubility of the mineral precipitation reducing agent (3) and its concentration in the water during times of withdrawal of water or when flowing through the water treatment device, and wherein a second medium (5) for affecting the solubility of the mineral precipitation reducing agent (3) and its concentration in the water is used in order to reduce the solubility of the agent (3) and its concentration in the water during periods of stagnation of water or when there is no flow through the water treatment device.

2. The method for the treatment of water by means of a water treatment device according to claim 1, **characterised in that** the first and the second medium (4, 5) are mixed in a mixing chamber (7).

3. The method for the treatment of water by means of a water treatment device according to any one of the preceding claims, **characterised in that** the first medium is formed by a first partial stream (18) of the water to be treated, said partial stream being guided via a water treatment line (19), and/or that the second medium is formed by a second partial stream (20) of the water to be treated, said second partial stream being guided differently from the first partial stream.

4. The method for the treatment of water by means of a water treatment device according to any one of the preceding claims, **characterised in that** the pH value of the first medium is changed by the use of ion exchangers, in particular by the use of cation exchangers present predominantly in hydrogen form.

5. The method for the treatment of water by means of a water treatment device according to any one of the preceding claims, **characterised in that** a phosphate-containing agent or polyphosphate is used to reduce mineral precipitation.

6. The method for the treatment of water by means of a water treatment device according to any one of the preceding claims, **characterised in that** the first medium is guided via at least one first inflow path (9, 11) into a receptacle for the mineral precipitation reducing means, and the second medium, via at least one second inflow path (10, 12).

7. The method for the treatment of water by means of a water treatment device according to any one of the preceding claims, **characterised in that** the first and/or second medium or a medium mixture (4, 5) resulting therefrom is brought into contact at least with the outer lateral surface, preferably also a surface of a front side, of the receptacle for the mineral precipitation reducing means.

8. The method for the treatment of water by means of a water treatment device according to any one of the preceding claims, **characterised in that** the medium acts as a solubility moderator on the mineral precipitation reducing means (3) and/or as a concentration moderator on the mineral precipitation reducing means (3) in the water.

9. The method for the treatment of water by means of a water treatment device according to any one of the preceding claims, **characterised in that** an anion exchanger, in particular a weakly alkaline anion exchanger, is used as the second medium.

10. The method for the treatment of water by means of a water treatment device according to any one of the preceding claims, **characterised in that** a pH enhancer, in particular a sparingly soluble salt, e.g. calcium or magnesium carbonate, is used as a second medium.

11. The method for the treatment of water by means of a water treatment device according to any one of the preceding claims, **characterised in that** the second medium is or acts in a gaseous manner.

12. The method for the treatment of water by means of a water treatment device according to any one of the preceding claims, **characterised in that** a line connection head (22) and a replaceable filter cartridge are used as the water treatment device.

13. The method for the treatment of water by means of a water treatment device according to any one of the preceding claims 1 to 11, **characterised in that** a water tank (25) is used.

14. The method for the treatment of water by means of a water treatment device according to any one of the preceding claims, **characterised in that** complexing agents, such as phosphonates, phosphoric acid, triphosphates or polyphosphates, are used to prevent the precipitation of sparingly soluble alkaline earth compounds (e.g. hardness) or to inhibit corrosion.

15. The method for the treatment of water by means of a water treatment device according to any one of the preceding claims, **characterised in that** the water treatment device is used for the supply of water-conducting and/or water-heating household appliances or devices for the production and preparation of food and/or beverages with treated drinking water, such as beverage dispensers, coffee machines, ice makers, cooking and baking appliances, steam generators or high pressure cleaners, air conditioners or the like, with treated water.

## Revendications

1. Procédé de traitement de l'eau au moyen d'un dispositif de traitement de l'eau (1) par agencement dans le dispositif de traitement de l'eau (1) d'un agent (3) présent sous forme solide pour la réduction des précipitations minérales, **caractérisé en ce qu'**un premier milieu (4) influençant le comportement de dissolution de l'agent pour la réduction des précipitations minérales est utilisé, dans lequel le premier milieu (4) est formé par l'eau à traiter lors du passage à travers et par le contact avec une ligne de traitement (19), la ligne de traitement (19) étant conçue pour influencer la valeur de pH de l'eau à traiter, pour augmenter la solubilité de l'agent (3) destiné à réduire les précipitations minérales et leur concentration dans l'eau pendant les périodes de prélèvement d'eau ou lors de son écoulement dans le dispositif de traitement de l'eau et dans lequel un deuxième milieu (5) pour influencer la solubilité de l'agent (3) pour réduire les précipitations minérales et sa concentration dans l'eau, est utilisé afin de réduire la solubilité de l'agent (3) et sa concentration dans l'eau pendant des périodes de stagnation de l'eau ou d'absence d'écoulement à travers le dispositif de traitement de l'eau.

2. Procédé de traitement de l'eau au moyen d'un dispositif de traitement de l'eau selon la revendication 1, **caractérisé en ce que** le premier et le deuxième milieu (4, 5) sont mélangés dans une chambre de mélange (7).

3. Procédé de traitement de l'eau au moyen d'un dispositif de traitement de l'eau selon l'une des revendications précédentes, **caractérisé en ce que** le premier milieu est formé par un premier flux partiel (18) de l'eau à traiter guidé par une ligne de traitement de l'eau (19) et/ou **en ce que** le deuxième milieu est formé par un deuxième flux partiel (20) de l'eau à traiter guidé différemment du premier flux partiel.

4. Procédé de traitement de l'eau au moyen d'un dispositif de traitement de l'eau selon l'une des revendications précédentes, **caractérisé en ce que** la valeur de pH du premier milieu est modifié par l'utilisation d'échangeurs d'ions, en particulier par l'utilisation d'échangeurs de cations présents principalement sous forme hydrogène.

5. Procédé de traitement de l'eau au moyen d'un dispositif de traitement de l'eau selon l'une des revendications précédentes, **caractérisé en ce qu'**un agent contenant du phosphate ou un polyphosphate est utilisé pour réduire les précipitations minérales.

6. Procédé de traitement de l'eau au moyen d'un dispositif de traitement de l'eau selon l'une des revendications précédentes, **caractérisé en ce que** le premier milieu est guidé via au moins une première voie d'afflux (9, 11) dans un réceptacle de collecte pour l'agent de réduction des précipitations minérales et le deuxième milieu via au moins une deuxième voie d'afflux (10, 12).

7. Procédé de traitement de l'eau au moyen d'un dispositif de traitement de l'eau selon l'une des revendications précédentes, **caractérisé en ce que** le premier et/ou le deuxième milieu ou un mélange de milieux résultant (4, 5) sont placés en contact au moins avec la surface de gaine extérieure, de préférence aussi une surface de la face avant du réceptacle de collecte pour l'agent de réduction de précipitations minérales.

8. Procédé de traitement de l'eau au moyen d'un dispositif de traitement de l'eau selon l'une des revendications précédentes, **caractérisé en ce que** le milieu agit en tant que modérateur de solubilité sur l'agent de réduction des précipitations minérales (3) et/ou en tant que modérateur de concentration sur l'agent de réduction des précipitations minérales (3) dans l'eau.

9. Procédé de traitement de l'eau au moyen d'un dispositif de traitement de l'eau selon l'une des revendications précédentes, **caractérisé en ce qu'**un échangeur d'anions, en particulier un échangeur d'anions faiblement basique, est utilisé comme deuxième milieu.

10. Procédé de traitement de l'eau au moyen d'un dispositif de traitement de l'eau selon l'une des revendications précédentes, **caractérisé en ce qu'**un élévateur de pH, en particulier un sel peu soluble, par ex. le carbonate de calcium ou de magnésium, est utilisé comme deuxième milieu.

11. Procédé de traitement de l'eau au moyen d'un dispositif de traitement de l'eau selon l'une des revendications précédentes, **caractérisé en ce que** le deuxième milieu est ou agit sous forme gazeuse.

12. Procédé de traitement de l'eau au moyen d'un dispositif de traitement de l'eau selon l'une des revendications précédentes, **caractérisé en ce qu'**une tête de raccordement de conduite (22) et une cartouche filtrante remplaçable sont utilisées en tant que dispositif de traitement de l'eau.

13. Procédé de traitement de l'eau au moyen d'un dispositif de traitement de l'eau selon l'une des revendications précédentes 1 à 11, **caractérisé en ce que** l'on utilise un réservoir d'eau (25).

14. Procédé de traitement de l'eau au moyen d'un dispositif de traitement de l'eau selon l'une des revendications précédentes, **caractérisé en ce que**, pour empêcher la précipitation de composés alcalino-terreux peu solubles (par exemple, le calcaire) ou pour empêcher la corrosion, des agents complexants, comme par ex. un phosphonate, de l'acide phosphorique, un triphosphate ou un polyphosphate sont utilisés.

15. Procédé de traitement de l'eau au moyen d'un dispositif de traitement de l'eau selon l'une des revendications précédentes, **caractérisé en ce que** le dispositif de traitement de l'eau est destiné à l'alimentation d'appareils ménagers à circulation et/ou à chauffage d'eau ou d'appareils pour la production et la préparation d'aliments et/ou de boissons avec de l'eau potable traitée, tels que des distributeurs de boissons, des machines à café, des sorbetières, des appareils de cuisson, des générateurs de vapeur ou des nettoyeurs haute pression, des conditionneurs d'air ou équivalent avec de l'eau traitée.
